# EUROPÄISCHE PATENTANMELDUNG

(11) **EP 1 879 287 A1**
(43) Veröffentlichungstag der Anmeldung: **16.01.2008**
(21) Anmeldenummer: 06012908.7
(22) Anmeldetag: 22.06.2006
(51) Int. Cl.: H02P 5/695, H02J 9/06, H02K 1/27, H01L 31/045

(54) **Transportable Drehstromversorgungsanlage**

(71) Anmelder: Guttormsson, Ingbert Joachim, 68766 Hockenheim (DE)
(72) Erfinder: Guttormsson, Ingbert Joachim, 68766 Hockenheim (DE)

(57) **Zusammenfassung**

Ausgehend von einer transportablen Drehstromversorgungs - anlage, bestehend aus einem einen Anker eines Drehstrom - generators mit einer aus Spulen bestehenden Statorwicklung anzutreibenden Motor, wird zur Lösung der Aufgabe eine prak - tisch autarke Drehstromversorgungsspannung zu ermöglich, erfindungsgemäß vorgeschlagen, daß ein von einer Gleichstrom - quelle gespeister Gleichstromnebenschlußmotor den Anker eines Drehstromgenerators (3) mittels Übersetzungsgetriebe, ins - besondere Zahnriementrieb, mit einer Übersetzung von 1,24 antreibt, daß die Anzahl der Magnetpole (37) des Ankers (20) gleich ist der Anzahl der Anzahl der Pole des diesen umgebenden Stators, daß die Spulen (15, 16, 17) der Statorwicklung (14) direkt im Stern zu drei Phasen zusammengeschaltet sind, und daß der Drehstromgenerator (3) an seinem elektrischen Aus - gang eine 3- Phasen- Sinuswechselspannung mit praktisch glei - cher Frequenz bei vorgegebener Dauerleistung zur Verfügung hält

## Beschreibung

Die Erfindung betrifft eine transportable Drehstromversorgungsanlage, bestehend aus einem, einen Anker eines Drehstromgenerators mit einer aus Spulen bestehenden Statorwicklung antreibenden Motor.

Derartige transportable Drehstromversorgungsanlagen werden im Baustellenbereich zur Notstromversorgung und auch in Notfällen bei der Bergung von Personen sowie deren Versorgung mit Wasser/ oder Licht eingesetzt. Weitere Einsatzbereiche derartiger transportabler Drehstromversorgungsanlagen sind ganz allgemein die Industrie, Stromversorgung von Gebäuden, Freizeit und Hobby sowie beim Einsatz von Hilfskräften in der Dritten Welt.

Bisher werden diese transportablen Drehstromversorgungsanlagen mit Benzinmotoren und Dieselmotoren angetrieben, bei welcher der Drehstromgenerator starr mit dem Antriebsmotor verbunden ist. Hierbei treten dann beachtliche Schwierigkeiten auf, wenn Engpässe in der Versorgung der erforderlichen Betriebsstoffe auftreten und zwar unabhängig davon, ob es sich bei den Betriebsstoffen um Benzin für kleinere transportable Drehstromversorgungsanlagen handelt, oder bei größeren um Dieselkraftstoff handelt.

Darüberhinaus ist der in diesen Anlagen dringend erforderliche Drehstromgenerator wegen seines mehrteiligen Aufbaus reparaturanfällig und wartungsintensiv. Bisher verwendete Drehstromgeneratoren zur Erzeugung von Drehstrom beispielsweise für den Antrieb von Winkelschleifern, elektrischen Rütteleinrichtungen oder Bohrhämmern sind in ihrem elektrischen Aufbau durch den Einsatz von Kondensatoren störanfällig, insbesondere beim Einsatz in der Dritten Welt. Um einen Einsatz dort zu ermöglichen, sind beachtliche Aufwendungen für die Bereithaltung von Ersatzteilen und auch von Antriebsenergie - Benzin, Dieselkraftstoffzwingend erforderlich, welche zusätzlich einen derartigen Einsatz verteuern, da diese Hilfsstoffe immer wieder erneut zur Verfügung gestellt werden müssen.

Ausgehend hiervon liegt der vorliegenden Erfindung die Aufgabe zugrunde, eine einfache störunanfällige und von einer Lieferung von Hilfsstoffen unabhängige transportable Drehstromversorgungsanlage zu schaffen. Diese Aufgabe wird gemäß Anspruch 1 dadurch gelöst, daß ein von einer Gleichstromquelle gespeister Gleichstromnebenschlußmotor den Anker eines Drehstromgenerators mittels Übersetzungsgetriebe, insbesondere Zahnriementrieb, mit einer Übersetzung ins schnelle antreibt, das die Anzahl der Pole des Ankers gleich ist der Anzahl der Pole des diesen umgebenden Stators, daß die Spulen der Statorwicklung direkt zu drei Phasen zusammengeschaltet sind und daß der Drehstromgenerator an seinem elektrischen Ausgang eine Drehstromspannung mit praktisch gleicher Frequenz bei vorgegebener Dauerleistung zur Verfügung hält. Durch die Benutzung einer Gleichstromquelle beim Antrieb des erfindungsgemäßen Drehstromgenerators mit dem erfindungsgemäßen Gleichstromnebenschlußmotor fällt zum einen die Versorgung der transportablen Drehstromversorgungsanlage durch flüssige oder gasförmige Antriebsstoffe weg und es ist darüberhinaus auch noch eine Versorgung von Verbrauchern mit Drehstrom und Wechselstrom möglich, auch wenn die Frequenz nicht genau eingehalten werden kann, sei es durch den augenblicklichen Ladezustand der Gleichstromquelle, oder durch den Anschluß zu vieler Verbraucher.

Eine Ausgestaltung der transportablen Drehstromversorgungsanlage besteht gemäß Anspruch 2 darin, daß die Leerlauffrequenz des Drehstromgenerators höher als die Frequenz bei einer Leistungsentnahme aus dem Drehstromgenerator ist. Hierdurch wird die Einsatzbreite des Erfindungsgegenstandes wesentlich erweitert.

Die weitere Ausgestaltung des Erfindungsgegenstandes wird gemäß Anspruch 3 unter Schutz gestellt, daß bei Unterschreiten einer vorgegebenen Leistungsfrequenz für die abzugebende Dauerleistung mindestens ein Abnehmer abgetrennt wird. Durch die direkte Beeinflussung der Drehzahl des Gleichstrommotors bei erhöter Belastung durch die vom Drehstromgenerator abzugebende Leistung wird durch Abtrennen eines Abnehmers eine deutliche Stabilisierung in der transportablen Drehstromverorgungsanlage eintreten.

Wird gemäß Anspruch 4 erfindungsgemäß eine wiederaufladbare Gleichstromquelle für die Versorgung des Gleichstromnebenschlußmotors vorgesehen, so verringert sich zwangsläufig die Anzahl der Bereitstellung von Gleichstromquellen. Hierdurch ist es jedoch auch möglich, bei vorgegebener Arbeitszeit während der Ruhezeit die entladene Gleichstromquelle wieder aufzuladen, so daß bei neuem Arbeitsbeginn wieder eine voll einsatzfähige Versorgung des Gleichstromnebenschlußmotors gegeben ist.

An dieser Stelle wird ausdrücklich darauf hingewiesen, daß durch die Versorgung einer erfindungsgemäßen transportablen Drehstromversorgungsanlage mittels erfinderischem Einsatz eines Gleichstromnebenschlußmotors die Geräuschbelastung derartiger Anlagen praktisch auf Null sinkt. Dies ist insbesondere wichtig bei Notstromversorgungsanlagen in Krankenhäusern und auch bei der Notstromversorgung von Büro - und Geschäftsräumen.

In noch weiterer Ausgestaltung des Erfindungsgegenstandes wird gemäß Anspruch 5 vorgeschlagen, daß die mindestens eine wiederaufladbare Gleichstromquelle mit einer Einrichtung zur Umsetzung erneuerbarer Energien verbunden ist. Hierdurch wird eine praktisch autarke transportable Drehstromversorgungsanlage geschaffen, die nicht nur in Dritten- Welt-Ländern, sondern auch für jeden Anwendungsort insbesondere bei Notfällen als praktisch autarke Einrichtung benutzt werden kann. So kann beispielsweise Sonnenenergie für die Wiederaufladung von Gleichstromquellen benutzt werden.

In noch weiterer Ausgestaltung wird gemäß Anspruch 6 unter Schutz gestellt, daß bei mindestens zwei wiederaufladbaren Gleichstromquellen durch einen Umschalter zwischen den Gleichstromquellen die wiederaufgeladene Gleichstromquelle vorrangig den Gleichstromnebenschlußmotor versorgt. Hiermit sind bei hoher Leistungsabgabe des Drehstromgenerators an Verbraucher Zwangspausen für das Wiederaufladen oder auch Überwachung des Wiederaufladens außerhalb der Arbeitszeit nicht mehr erforderlich.

Gemäß Anspruch 7 wird ein Drehstromgenerator mit einem Rotor und einem Stator bestehend aus Blechpaketen mit Nuten und in diese gewickelte Spulen für die transportable Drehstromversorgungsanlage unter Schutz gestellt, der sich dadurch auszeichnet, daß auf dem Rotor aufgeklebte Permanentmagnete als Pole dienen, daß dieselbe Anzahl von in die Nuten des Stators gewickelten Einzelspulen anschließend direkt zu drei Phasen zusammengeschaltet als Wicklung dienen, daß diese Wicklung den Rotor umgibt, daß der Stator aus einem Dynamoblechpaket eines entsprechende Elektromotors besteht, daß die mit Spulen belegbare Nutenfläche des Stators des Drehstromgenerators größer als die Nutenfläche des entsprechenden Elektromotors ist.

Durch den erfindungsgemäßen Einsatz eines Dynamoblechpakets eines Elektromotors, dessen Nutenfläche größer als die beim entsprechenden Elektromotor ist, wird die für die Drehstromerzeugung erforderliche Kupfermasse erhöht und damit eine Erwärmung des Drehstromgenerators auch bei Abgabe der maximalen Drehstromleistung nicht erhöht wird.

In noch weiterer Ausgestaltung des Erfindungsgsgenstandes wird gemäß Anspruch 8 ein Drehstromgenerator unter Schutz gestellt, der sich dadurch auszeichnet, daß bei einem 2- poligen Drehstromgenerator mit 90 Grad gegeneinander versetzten auf den drehbaren Anker aufgeklebte Permanentmagnete von zu drei Phasen direkt zusammengeschalteten drei Spulen mit einem Luftspalt beabstandet umgeben sind, daß die Spulen in vergrößerte Nutenflächen eines Dynamoblechpaketes eines 2- poligen Elektromotors gewickelt sind, daß das Ende der ersten Spule, das Ende der zweiten Spule mit dem Ende der dritten Spule verbunden ist (Sternpunkt).

Das zwischen den drei Spulenanfängen eine 3 Phasen-Sinuswechselspannung von 400 V und eine Frequenz von 50 Hz herscht. Das zwischen dem Sternpunkt und L1, L2, und L3 eine Sinuswechselspannung von 230 V und eine Frequenz von 50 Hz herscht.

In noch weiterer Ausgestaltung wird gemäß Anspruch 9 unter Schutz gestellt, daß alle Nuten des Dynamoblechpaketes von der aus 3 Spulen bestehenden Statorwicklung belegt sind. Hierdurch wird der Sinusverlauf der 3 Phasen Wechselspannung noch wesendlich verbessert.

In noch weiterer Ausgestaltung des Erfindungsgegenstands, insbesondere nach Anspruch 1 wird in Anspruch 10 unter Schutz gestellt, daß die Gleichstromquelle 600 Amper bei 48 Volt abgibt, daß der Gleichstromnebenschlußmotor mit einer Leistung von 10000 Watt bei 2900 Upm über einen Zahnriementrieb mit einer festen Übersetzung den Anker des Drehstromgenerators mit 3600 Upm im Leerlauf antreibt, daß eine Leerlaufspannung des Drehstromgenerators von 420 Volt bei 60 Hz vorhanden ist, daß der Anker des Drehstromgenerators mit 2 um 180° Grad gegeneinander versetzen auf den Anker aufgeklebten Magneten versehen ist, daß der Anker einen Außendurchmesser von 108,5 mm und eine Länge von 250 mm besitzt, daß das in seinen Außenabmessungen einem 2- poligen Elektromotor entsprechende den Anker als Stator umgebende Dynamoblechpaket einen Innendurchmesser von 110 mm, Außendurchmesser von 200 mm und eine Länge von 245 mm und eine Rückenhöhe von 25 mm besitzt, daß das Dynamoblechpaket 36 Nuten besitzt und aus 471 Einzelblechen besteht, daß die Fläche einer Nut eines Dynamoblechs zur Aufnahme der Kupferwicklungen 151,7 mm² beträgt im Gegensatz zu einer Nutenfläche von 102,9 mm² beim Einsatz als Dynamoblech bei einem baugleichen 2- poligen Elektromotor, daß 3 symetrisch in 6- Loch Wicklung gewickelte Spulen hintereinander einschichtig gewickelt alle Nuten des Dynamoblechs belegen, daß je Nut 9 Leiter vorhanden sind, daß der Leiter einen Kupferquerschnitt von 6,89 mm² besitzt, daß der Nutenschritt 1-7 beträgt, daß durch Zusammenschaltung der Spulenenden eine Dreiphasige Wicklung entsteht, daß zwischen den Spulenanfängen der ersten Spule, der zweiten Spule und der dritten Spule eine Symetrische 3 Phasen- Sinuswechselspannung von 420 V 60 Hz im Leerlauf und von 400 V 50 Hz praktisch bei einer Leistungsabgabe von 16000 VA ansteht und abgebbar ist.

Hierdurch wird eine im Lastbereich elastische transportable Drehstromversorgungsanlage erfindungsgemäß geschaffen, die es ermöglicht, unter Ausnutzung der in den Verbrauchern zugelassenen Schwankungen im Hinblick auf Frequenz und Spannung als Drehstromerzeugungsanlage dort eingesetzt zu werden, wo im Falle eines Antriebs einer Drehstromanlage mit Verbrennungsmotor bereits mindestens ein Drehstromgenerator höherer Leistung eingesetzt werden müßte.

In Ausgestaltung des Erfindungsgegenstandes nach Anspruch 10 wird in Anspruch 11 unter Schutz gestellt, daß ein Ankerkern aus einem Zylinder mit quadratischem Querschnitt aus Aluminium besteht, daß die Magnete in Nuten des Zylindermantels eingeklebt sind, daß der Ankerkern von einem magnetische nicht leitendem Rohr umgeben ist und daß der Ankerkern im magnetisch nicht leitenden Rohr vergossen ist.

Eine derartige Herstellungsart dient zum einen dem Schutz der Magnete und zum anderen ist hierdurch eine glatte riefenfreie Oberfläche des Ankers gewährleistet.

In noch weiterer Ausgestaltung des Erfindungsgegenstandes wird nach Anspruch 12 unter Schutz gestellt, daß ein nicht rostendes Sthlrohr V2A mit einem Innendurchmesser von 105,8 mm und einem Außendurchmesser von 108,5 mm mit einer Länge von 250 mm vorgesehen ist, daß die symetrisch auf jeder Quadratseite angeordneten Nuten eine Breite im Aluminiumzylinder von je 30,2 mm bei einer Tiefe von 12,2 mm eine Länge von 250 mm besitzen und daß in diesen Nuten ein Magnet von einer Breite 30mm Tiefe 12 mm und einer Länge 220 mm eingesetzt ist. Daß die über jede Quadratseite hinausragende maximale Höhe des Magneten 20 mm bei einer Breite von 52 mm beträgt un daß der Magnet eine Länge von 240 mm besitzt und daß die oberen Kanten der Magnete abgeschrägt sind.

Insbesondere durch die Abschrägung der Magnete wird ein praktisch gleichmäßiges symetrisches Magnetfeld, welches aus zwei Polen besteht, erzeugt.

In noch weiterer Ausgestaltung des Erfindungsgegenstandes wird in Anspruch 13 unter Schutz gestellt, daß die Magnete aus Semarium- Cobald und NeodymEisen - Bor ND Fe B 235/ 160 h und ND Fe B 230/175h bestehen.

Derartige Magnete sind besonders geeignet für die erfindungsgemäße transportable Drehstromversorgungsanlage.

In noch weiterer Ausgestaltung des Erfindungsgegenstandes wird in Anspruch 14 unter Schutz gestellt, daß für eine Magnetlänge Oberschicht von 240 mm Teilmagnete vorgesehen sind und für eine Magnetlänge Unterschicht von 240 mm 4 Teilmagnete vorgesehen sind.

Durch das Verkleben zu einer Gesamtlänge von 240 mm wird eine Beeinflussung des Magnetfeldes nicht hervorgerufen.

In noch weiterer Ausgestaltung des Erfindungsgegenstandes wird gemäß Anspruch 15 unter Schutz gestellt, daß ein über Schließerkontakte betätigbare automatische Fremdbelüftung vorgesehen ist. Hierdurch wird die Sicherheit des Erfindungsgegenstandes noch weiter erhöht.

In der nachfolgenden Beschreibung wird die Erfindung anhand eines chematisch dargestellten Ausführungsbeispiels erläutert:

Es zeigen
- Figur 1 :: eine erfindungsgemäße transportable Drehstromversorgungsanlage mit Gleichstrombatterie einschließlich Gleichstromversorgungsteil.
- Figur 2 :: ein elektrisches Schaltbild eines erfindungsgemäßen Gleichstromantriebs für einen erfindungsgemäßen Drehstromgenerator.
- Figur 2a :: den zeitlichen Verlauf eine vom Generator abgegebenen sinusförmigen Spannung (27) im Vergleich mit dem sinusförmigen Verlauf der Netzspannung (26) bei 400 V.
- Figur 3 :: ein Dynamoblech eines Blechpakets zur Aufnahme der Statorwicklung mit 36 Nuten.
- Figur 4 :: einen aus mehreren Teilstücken zusammengeklebten Magneten.
- Figur 4a :: einen aus vier Teilstücken zusammengeklebten Magneten.
- Figur 5 :: einen Ankerkern mit eingeklebten Magneten und einen nicht magnetischen Kühlrohr.
- Figur 6 :: ein Wicklungsschaltbild des Drehstromgenerators
und
- Figur 7 :: eine automatische Fremdbelüftung für eine transportable Drehstromversorgungsanlage.

In der nachfolgenden Zeichnung werden gleiche Bauteile mit den selben Bezugsziffern bezeichnet.

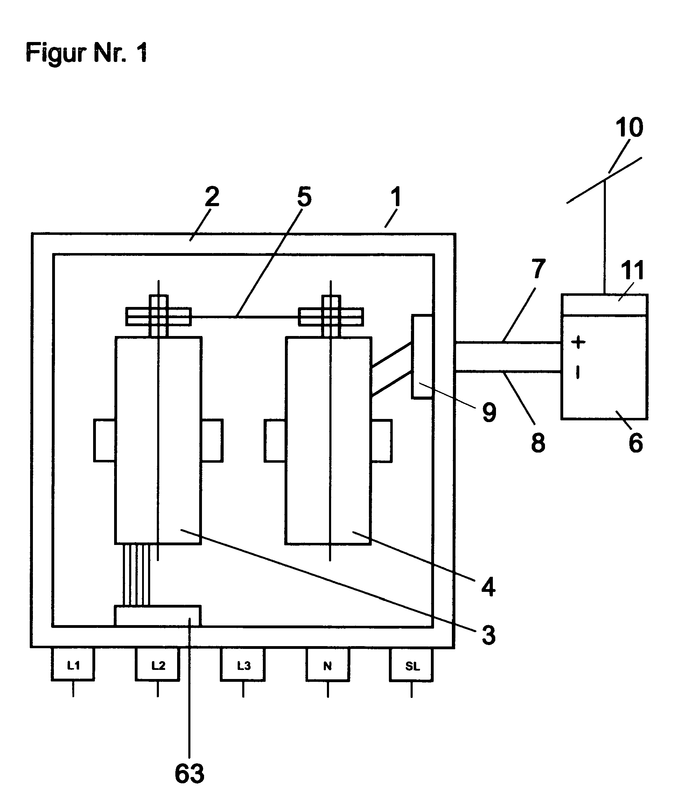

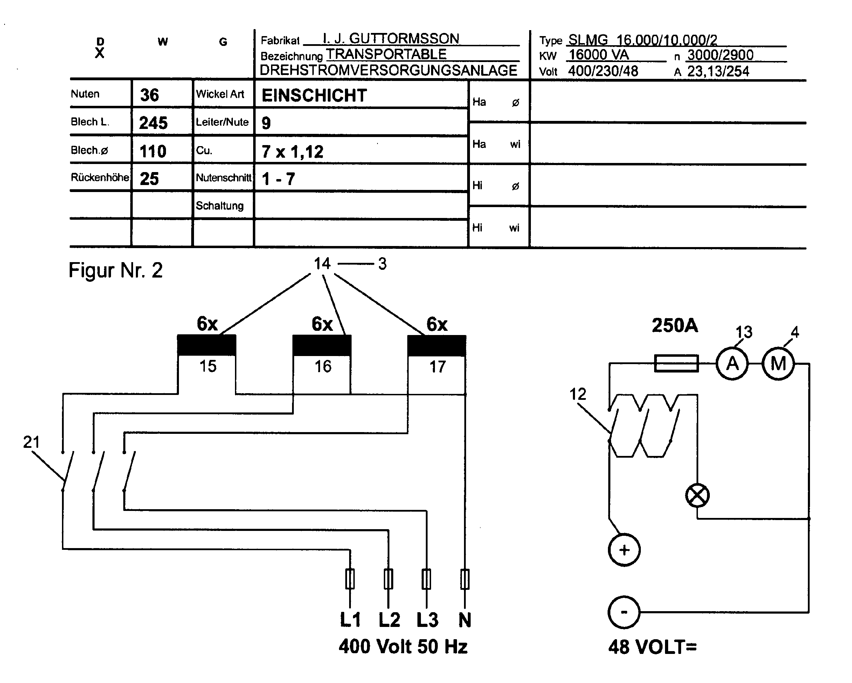

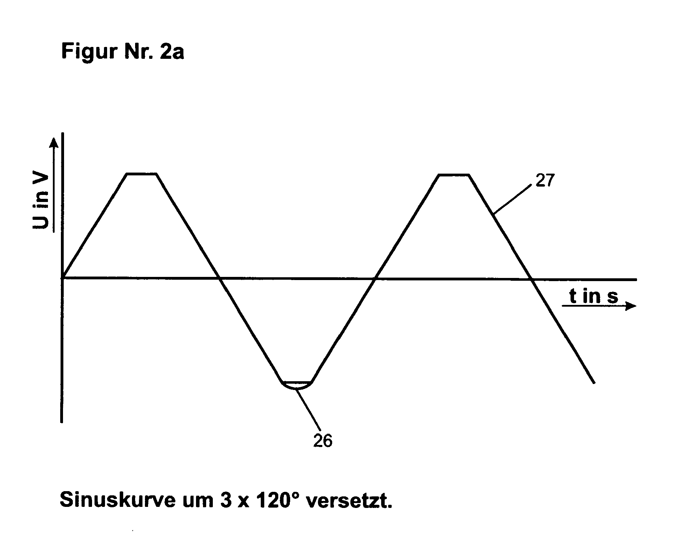

Gemäß Figur 1 besteht eine transportable Drehstromversorgungsanlage 1 aus einem Gehäuse 2, in welchem ein Drehstromgenerator 3 angeordnet ist, der von einem Gleihcstromnebenschlußmotor 4 über einen Zahnriementrieb 5 in einem festen Übersetzungsverhältnis angetrieben wird.

Gemäß Figur 1 ist eine Gleichstromquelle 6, bei welcher es sich um eine Gleichstrombatterie handeln kann, außerhalb des Gehäuses 2 angeordnet und es wird über Zuleitungen 7,8 Gleichstrom dem Gleichstromnebenschlußmotor über einen Sicherungskasten 9 zugeleitet. Der Sicherungskasten enthält gleichzeitig auch Sicherungselemente, um den Antrieb des Drehstromgenerators 3 zu unterbrechen, wenn beispielsweise eine zu geringe Gleichspannung anliegt oder auch um zu verhindern, daß der Gleichstromnebenschlußmotor mit einer Wechselstromquelle verbunden wird.

In Figur 1 ist darüberhinaus eine mit Sonnenenergie betreibbare Umsetzeinrichtung 10 vorgesehen, welche über ein Eingangsglied 11 in der Lage ist, die Gleichstromquelle 6 entweder ständig nachzuladen oder auch bei Vorhandensein von mindestens 2 Gleichstromquellen 6 jeweils die nicht benutzte Gleichstromquelle 6 mit Gleichstrom aufzuladen, damit diese dann vorrangig die Versorgung des Gleichstromnebenschlußmotors 4 übernimmt.

Anstelle einer derartigen Anordnung ist es jedoch auhc im Rahmen der Erfindung möglich, die Gleichstromquelle 6 als herausnehmbare Einheit im Gehäuse 2 selbst anzuordnen und bei Bedarf herauszunehmen oder über nicht dargestellte Verbindungsleitungen ebenfalls mit der Umsetzeinrichtung 10, welche Sonnenenergie in Gleichspannung umsetzt, zu verbinden.

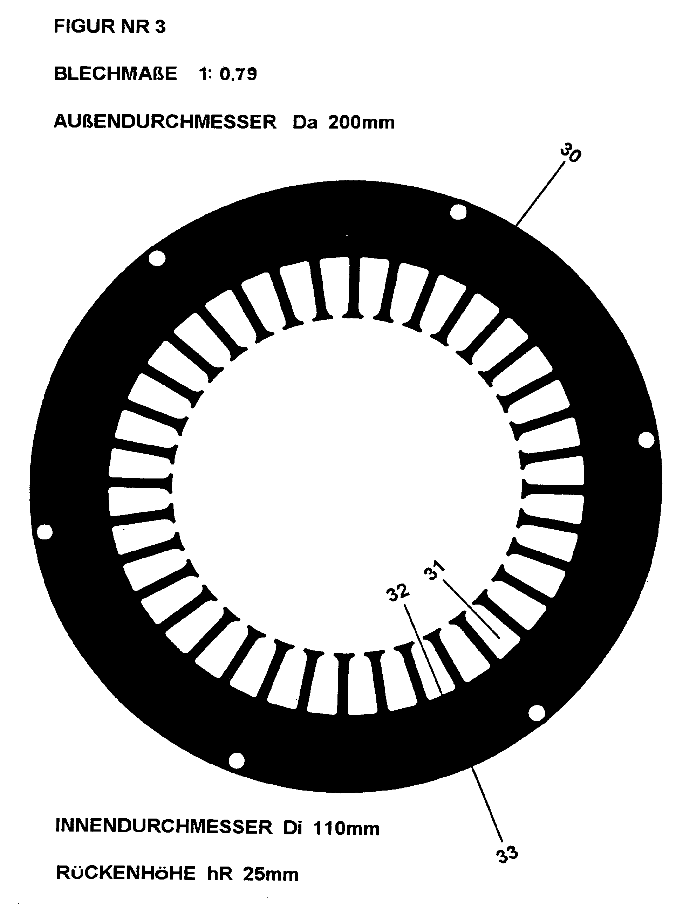

In Figur 2 wird ein Schaltbild eines Gleichstromantriebs für einen Drehstromgenerator dargestellt und gleichzeitig auch das Schaltbild für den Drehstromgenerator.

Von der nicht dargestellten Gleichstromquelle, welche eine Leistung von 600 Ampere aufweist bei einer Spannung von 48 V, wird der Gleichstromnebenschlußmotor 4 direkt an die Negativspannung angeshclossen, während die positive Spannung über einen Schalter 12 im Nebenschluß dem Motor zugeleitet wird, so daß eine Drehzahl von 2900 Umdrehungen am Anker 13 abgenommen werden kann.

Der Drehstromgenerator 3 besitzt eine Statorwicklung 14, welche im vorliegenden Falle aus einer ersten Spule 15, welche in 7 Loch- Wicklung gewickelt ist, eine zweite Spule 16, welche in 7- Loch Wicklung gewickelt ist, eine dritte Spule 17, welche in 7 Loch- Wicklung gewickelt ist.

Die Spulen 15, 16 und 17 sind hierbei folgendermaßen zusammengeschaltet:

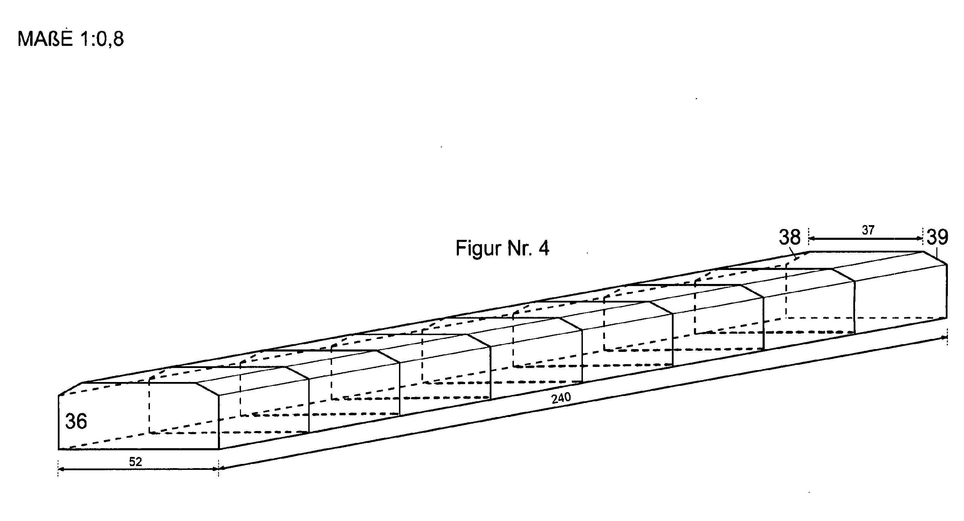

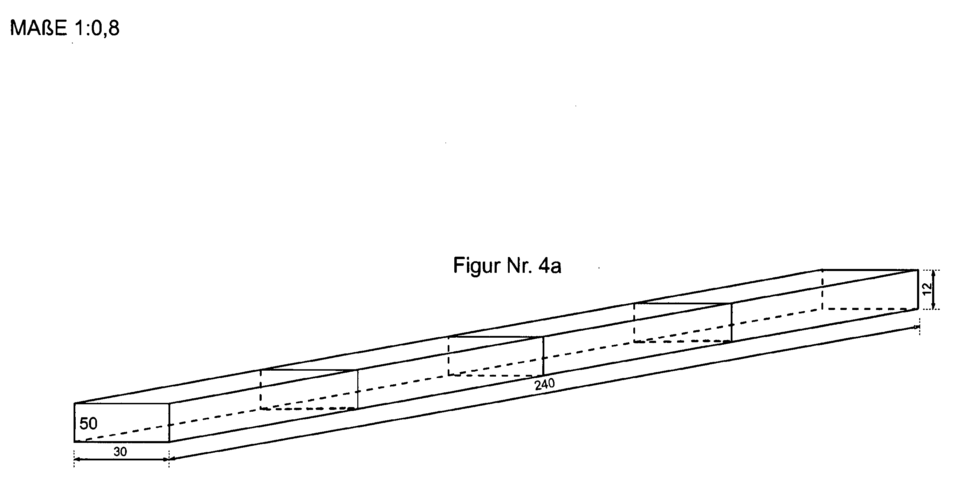

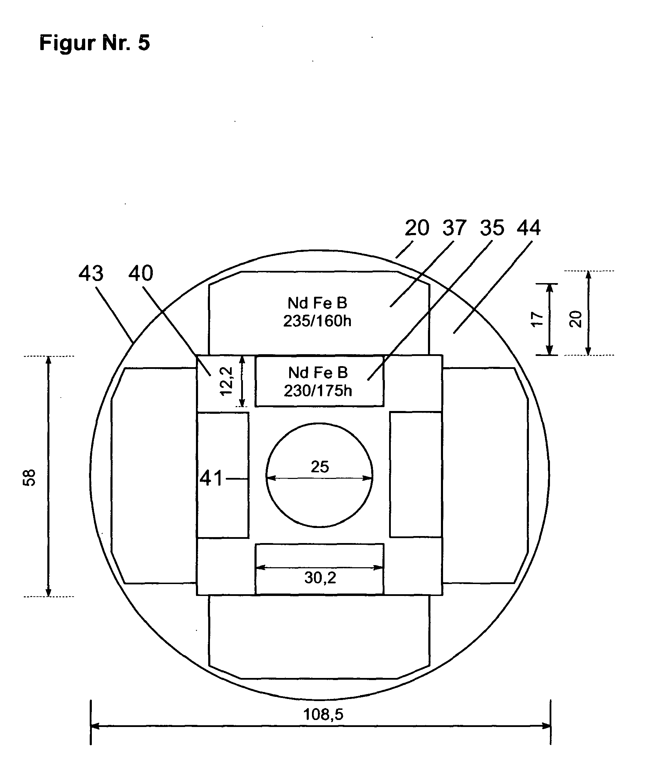

Das Ende der Spule 15 ist mit dem Ende der Spule 16 und mit dem Ende der Spule 17 verbunden (Sternpunkt). Zwischen den Spulenanfängen herrscht eine Ausgangsfrequenz von 50 Hz bei einer Lastspannung von 400 V, wenn dafür Sorge getragen ist, daß die Statorwicklung 14 einen in Figur 5 näher beschriebenen Generatoranker 20 umschließt, welcher vom Anker 13 über den Zahnriementrieb mit einer Drehzahl von 3600 Upm angetrieben wird.

Im Sicherungskasten 63 befindet sich die Absicherung des Generators. Um dem Drehstromgenerator 3 Strom entnehmen zu können, ist ein Einschalter 21 vorgesehen. Nach dem Einschalten kann an Leitungen L1, L2, L3 je nach deren Absicherung Strom für Arbeitsgeräte, die eine drei Phasenspannung von 400 V 50 Hz und über den Sternpunkt N eine Wechselspannung von 230 V haben.

In figur 2a ist eine Kurve 26 und eine weitere Kurve 27 dargestellt und zwar deren Spannungsverlauf in Abhängigkeit gezeigt. Die Kurve 26 stellt den Verlauf einer Sinuswechselspannung aus dem Netz dar, während die weitere Kurve 27 die Wechselspannung aus der transportablen Drehstromversorgungsanlage zeigt. Aus dem Vergleich dieser beiden Spannungsverläufe, die sowohl im Anstieg und auch in ihrem Abstieg identisch sind, und bei welchem sie lediglich maximal und minimal geringfügig unterschiedlich ausgebildet sind, zeigen, daß hiermit ohne weiteres eine ausgezeichnete Drehstromversorgung durch die erfindungsgemäße transportable Drehstromversorgungsanlage ermöglicht wird.

Figur 3 stellt ein Dynamoblech 30 dar, welches zu einem Blechpaket zur Aufnahme der gesamten Statorwicklung ausgebildet ist.

Das Dynamoblech besitzt Nuten 31. Im vorliegenden Fall sind 36 Nuten am Innenumfang des Dynamoblechs 30 vorgesehen, wobei jede Nut 31 einen Querschnitt von 151,7 mm² besitzt. Zwischen Nutengrund 32 und Außendurchmesser 33 des Dynamoblechs 30 ist ein Abstand 34 vorhanden. Dieser Abstand wird Rückenhöhe genannt und stellt ein Maß für den Blechquerschnitt eines Dynamoblechs dar.

In Figur 4 wird eine aus Einzelelementen 36 zusammengeklebter Polmagnet 37 dargestellt. Insbesondere bei den erfindungsgemäß eingesetzten SemariumCobald und Neodym- Eisen- Bor Nd Fe B 235/160 h bestehenden Polmagneten ist zufolge der hohen Verarbeitungsgenauigkeit eine derartige Stückelung in Einzelelemente möglich und angebracht. Derartig in Achsrichtung verklebte Polmagnete 37 besitzt Abschrägungen 38, 39 zwischen ihrem vertikalen und horizontalen Randbegrenzungen.

In Figur 4a wird eine aus Einzelelementen 50 zusammengeklebter Polmagnet 35 dargestellt. Erfindungsgemäß eingesetzten Semarium- Cobald und NeodymEisen- Bor Nd Fe B 230/175 h.

Figur 5 besitzt einen zylindrischen Ankerkern 40 mit quadratischem Querschnitt an seinen Außenseiten U- förmige Haltenuten 41, in welche Polmagneten 35 eingeklebt und Polmagneten 37 aufgeklebt werden.

Der zylindrische Ankerkern wird nunmehr in nicht magnetisierbares Röhr 43 symetrisch eingeklebt und anschließend mit Vergußmasse 44 vergossen.

Ein derartiger Generatoranker 20 wird nunmehr im Abstand von wenigen Millimetern innerhalb der Dynamobleche rotierbar angeordnet und erzeugt zufolge Rotation seiner 4 Polmagnete 37/ 35 bei Rotation mit 3600 Upm eine Drehstromspannung von 420 V mit einer Frequenz von 60 Hz, wenn die symetrisch gewickelten Spulen 15 - 17 die Spulenenden direkt zusammengeschaltet sind. (Sternpunkt).

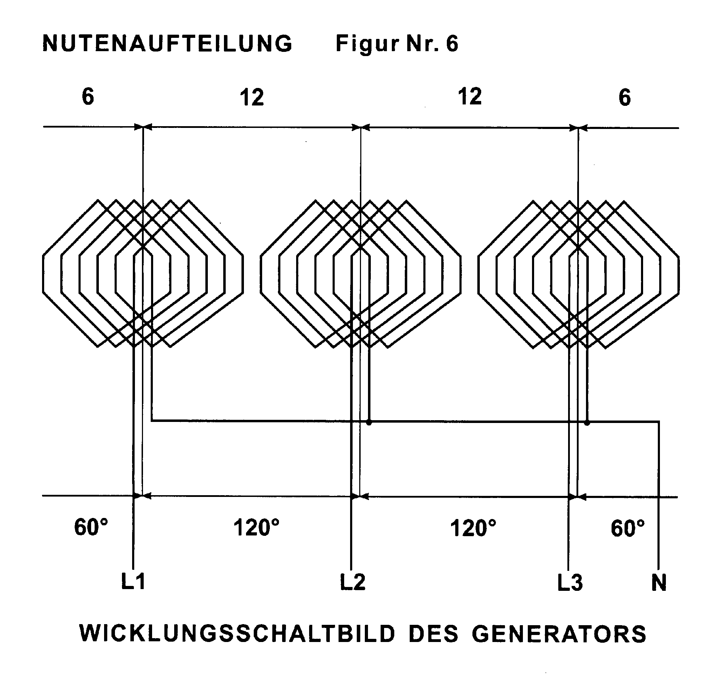

Aus dem in Figur 6 dargestellten Wicklungsschaltbild läßt sich erkennen, daß jeweils gleichförmige Wicklungsanteile mit je 12 Nuten auftreten und 2 Pole die jeweils 180° haben, wenn ein Dynamoblech 30 mit 36 Nuten am Innenumfang benutzt wird.

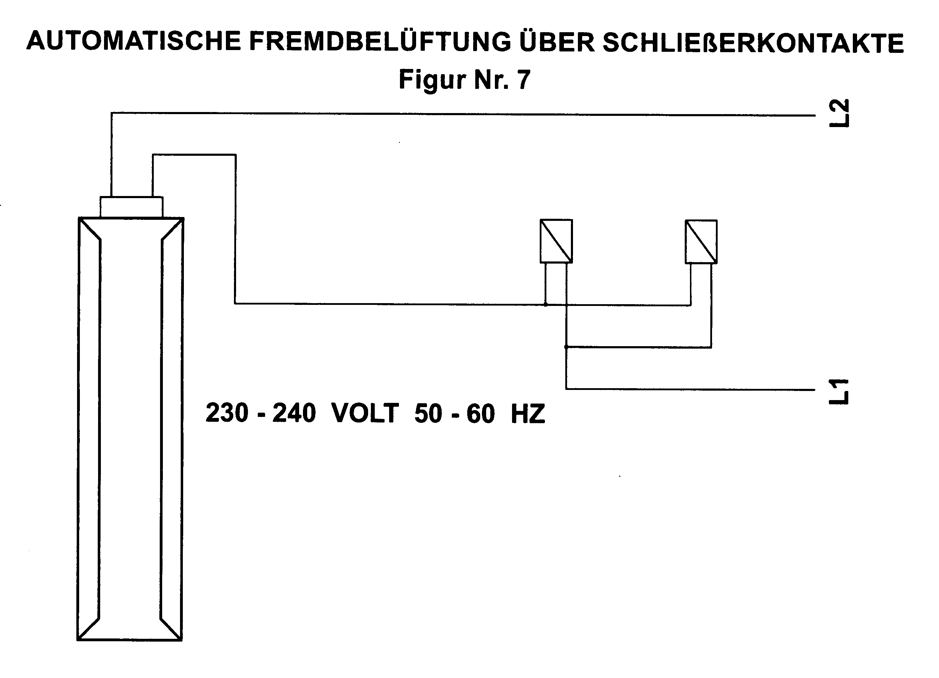

In figur 7 ist eine automatische Fremdbelüftung 70 über Schließerkontakte 71 und 72 mit 230 - 240 Volt 50 - 60 Hz dargestellt.

## Patentansprüche

1. Transportable Drehstromversorgungsanlage, bestehend aus einem einen Anker eines Drehstromgenerators mit einer aus Spulen bestehenden Statorwicklung antreibenden Motor, **dadurch gekennzeichnet;**
- **daß** ein von einer Gleichstromquelle (6) gespeister Gleichstromnebenschlußmotor (4) den Anker (20) eines Drehstromgenerators (3) mittels Übersetzungsgetriebe (5), insbesondere Zahnriemenbetrieb, mit einer Übersetzung 1,24 antreibt,- daß die Anzahl der Pole des Ankers (20) gleich ist der Anzahl der Pole des diesen umgebenen Stators.
- **daß** die Spulen ( 15, 16, 17 ) der Statorwicklung (14) direkt im stern zu drei Phasen zusammengeschaltet sind, und daß der Drehstromgenerator (3) an seinem elektrischen Ausgang eine dreiphasen Wechselspannung mit praktisch gleicher Frequenz bei vorgegebener Dauerleistung zu Verfügung hält.

2. Transportable Drehstromversorgungsanlage nach Anspruch 1, **dadurch gekennzeichnet, daß** die Leerlauffrequenz des Drehstromgenerators (3) höher als die Frequenz bei Leistungsentnahme ist.

3. Transportable Drehstromversorgungsanlage nach Anspruch 1 und/oder 2, **dadurch gekennzeichnet, daß** bei Unterschreiten einer vorgegebenen Leistungsfrequenz für die abzugebende Dauerleistung mindestens ein Abnehmer abgetrennt wird.

4. Transportable Drehstromversorgungsanlage nach einem oder mehreren der vorhergehenden Ansprüche, **dadurch gekennzeichnet, daß** mindestens eine wiederaufladbare Gleichstromquelle (6) vorgesehen ist.

5. Transportable Drehstromversorgungsanlage nach Anspruch 4, **dadurch gekennzeichnet, daß** die mindestens eine wiederaufladbare Gleichstromquelle (6) mit einer Einrichtung 10 zur Umsetzung erneuerbarer Energien verbunden ist.

6. Transportable Drehstromversorgungsanlage nach Anspruch 4 und/oder 5, **dadurch gekennzeichnet, daß** bei mindestens zwei wiederaufladbaren Gleichstromquellen duch einen Umschalter zwischen den Gleichstromquellen die wiederaufgeladene Gleichstromquelle vorrangig den Gleichstromnebenschlußmotor (4) versorgt.

7. Wechselstromgenerator mit einem Rotor und einem Stator, bestehend aus Blechpaket mit Nuten und in diesen gewickelte Spulen für die Drehstromversorgungsanlage nach einem oder mehreren der Ansprüche 1 - 6, **dadurch** gekennzeihcnet, daß auf dem Rotor aufgeklebte Permanentmagnete (35) und(37) als Pole dienen, daß dieselbe Anzahl von in die Nuten des Stators gewickelte Einzelspulen ( 15,16,17) anschließend direkt zu drei Phasen zusammengeschaltet als Wicklung dienen, daß diese Wicklung den Anker (20) umgibt, daß der Stator aus einem Dynamoblechpaket eines entsprechenden.Elektromotors besteht, daß die mit Spulen belegbare Nutenfläche des Stators des Drehstromgenerators (3) größer als die Nutenfläche des entsprechenden Elektromotors ist.

8. Drehstromgenerator nach einem oder mehreren der vorhergehenden Ansprüche, **dadurch gekennzeichnet, daß** bei einem 2- poligen Generator mit 180°Grad versetzten auf dem drehbaren Anker aufgeklebten Permanentmagneten und von zu drei Phasen direkt im Stern zusammengeschalteten 3 Spulen mit einem Luftspalt beabstandet umgeben sind, daß die Spulen in vergrößerten Nutenflächen eines Dynamoblechpakets eines 2- poligen Elektromotors gewickelt sind, daß das Ende der ersten Spule, das Ende der zweiten Spule mit dem Ende der dritten Spule verbunden ist. (Sternpunkt) Das zwischen den drei Spulenanfängen eine 3 Phasen- Sinuswechselspannung von 400 V 50 Hz herrscht. das zwischen dem Sternpunkt und L1, L2 und L3 eine Sinuswechselspannung von 230 V 50 Hz herrscht.

9. Drehstromgenerator nach Anspruch 7 und/oder 8, **dadurch gekennzeichnet, daß** alle Nuten des Dynamoblechpaketes von der aus 3 Spulen bestehenden Wicklung belegt sind.

10. Transportable Drehstromversorgungsanlage, bestehend aus einem einen Anker eines Drehstromgenerators mit einer aus Spulen bestehenden Statorwicklung antreibenden Motor insbesondere nach Anspruch 1, **dadurch gekennzeichnet, daß** die Gleichstromquelle (6) 600 Ampere- bei 48 V abgibt, daß der Gleichstromnebenschlußmotor (4) mit einer Leistung von 10000 Watt bei 2900 Upm über einen Zahnriementrieb (5) mit einer festen Übersetzung den Anker (20) des Drehstromgenerators (3) mit 3600 Upm im Leerlauf antreibt, daß eine Leerlaufspannung des Drehstromgenerators (3) von 420 Volt bei 60 Hz und zwischen dem Sternpunkt und L1 L2 und L3 eine Leerlaufspannung von 240 V 60 Hz herrscht, daß der Anker (20) des Drehstromgenerators mit 180°Grad gegeneinander versetzten aufgeklebten Magneten (35) und (37) versehen ist, daß der Anker (20) ein Außendurchmesser von 108,5 mm und eine Länge von 250 mm besitzt, daß das in seinen Außenabmessungen einen 2- poligen Elektromotor entsprechen, den Anker als Stator umgebende Dynamoblechpaket, einen Innendurchmesser von 110 mm, einen Außendurchmesser von 200 mm eine Länge von 245 mm und eine Rückenhöhe von 25 mm besitzt, daß das Dynamoblechpaket 36 Nuten besitzt und aus 471 Einzelblechen (30) besteht, daß die Fläche einer Nut (31) eines Dynamoblechs (30) zur Aufnahme der Kupferwicklungen 151,7 mm² beträgt, im Gegensatz zu einer Nutenfläche von 102,9 mm² beim Einsatz als Dynamoblech bei einem baugleichen 2- poligen Elektromotor, daß 3 symetrisch in 6- Loch- Wicklung gewickelte Spulen (15, 16,17 ) hintereinander einschichtig gewickelt alle Nuten (31) des Dynamoblechpaketes belegen, daß je Nut (31) 9 Leiter einen Kupferquerschnitt von 6,89 mm² besitzt, daß der Nutenschritt 1 - 7 beträgt.
Das durch zusammenschalten des Endes der ersten Spule (15) des Endes der zweiten Spule (16) und des Endes der dritten Spule (17) (Sternpunkt), eine 3 Phasensinuswechselspannung zwischen den Spulenanfängen von 400 V 50 Hz bei einer Leistungsabgabe von 16000 VA ansteht und abgebar ist.

11. Transportable Drehstromversorgungsanlage nach Anspruch 10, **dadurch gekennzeichnet, daß** ein Ankerkern (40) aus einem Zylinder mit quadratischem Querschnitt aus Aluminium besteht, daß die Magnete in Nuten des Zylindermantels eingeklebt und aufgeklebt sind, daß der Ankerkern (40) von einem nicht magnetisierbaren Rohr (43) umgeben ist und daß der Ankerkern (40) im magnetisch nicht leitenden Rohr (43) vergossen ist.

12. Transportable Drehstromversorgungsanlage nach 10 und /oder 11, **dadurch gekennzeichnet, daß** ein Wanadiumrohr (V2A) mit einem Innendurchmesser von 105,8 mm und einem Außendurchmesser von 108,5 mm mit einer Länge von 250 mm vorgesehen ist, daß die symetrisch auf jeder Quadratseite angeordneten U- förmigen Haltenuten (41) eine Breite von je 30,2 mm bei einer Tiefe von 12,2 mm und einer Länge von 250 mm besitzen und daß die über jede Quadratseite hinausragende maximale Höhe des Magneten 20 mm bei einer Breite von 52 mm beträgt und daß der Magnet eine Länge von 240 mm besitzt und daß die oberen Kanten des Magneten abgeschrägt ( 38, 39 ) sind.

13. Transportable Drehstromversorgungsanlage nach einem oder mehreren der vorhergehenden Ansprüche, **dadurch gekennzeichnet daß** die Magnete (37) aus Semarium- Cobald und Neodym- Eisen- Bor Nd Fe B 235/160 h und Magnete (35) aus Semarium- Cobald und Neodym- Eisen- Bor Nd Fe B 230/175h bestehen.

14. Transportable Drehstromversorgungsanlage nach Anspruch 13, **dadurch gekennzeichnet, daß** für eine Magnetlänge von 240 mm 8 Teilmagnete (36) und 4 Teilmagnete (50) für eine Magnetlänge von 240 mm vorgesehen sind.

15. Transportable Drehstromversorgungsanlage nach einem oder mehreren der vorhergehenden Ansprüche, **dadurch gekennzeichnet, daß** eine über Schließerkontakte betätigbare automatische Fremdbelüftung vorgesehen ist.
